# EUROPEAN PATENT SPECIFICATION

(11) **EP 4 384 725 B1**
(45) Date of publication and mention of the grant of the patent: **08.10.2025**
(21) Application number: 22764615.5
(22) Date of filing: 10.08.2022
(51) Int. Cl.: F16C 33/10, F16C 33/66, F16C 17/02, F16C 37/00, B64C 9/00, B64C 9/02, B64C 30/00

(54) **BEARING SYSTEM FOR HIGH SPEED FLIGHT VEHICLES**
LAGERSYSTEM FÜR HOCHGESCHWINDIGKEITSFLUGZEUGE
SYSTÈME DE PALIER POUR AVIONS À GRANDE VITESSE

(30) Priority: 13.08.2021 US 202163232823 P
(43) Date of publication of application: 19.06.2024
(73) Proprietor: Raytheon Company, Waltham, Massachusetts 02451-1449 (US)
(72) Inventor: STAGGERS, David D., Tucson, Arizona 85756 (US)
(74) Representative: Crowell & Moring U.K. LLP
(86) International application number: PCT/US2022/074747
(87) International publication number: WO 2023/019160

(56) References cited:
- EP-A1- 0 567 038
- US-A1- 2018 156 118
- US-A1- 2020 325 937

## Description

### Technical Field

The present disclosure relates generally to high speed flight vehicles and more particularly to flight control bearings for high speed flight vehicles.

### Background

Dynamic control of flight vehicles requires moving control surfaces such as tail fins, elevators, ailerons, elevons, rudders, flaps, slats, etc. Such control surfaces, especially those that pivot about a fixed axis, are typically mounted to the flight vehicle with bearings to support the loads that they transmit to the airframe of the flight vehicle. Journal bearings (referred to herein as "plain bearings") are one example of such bearings. Plain bearings consist of a simple round shaft passing through a sleeve of suitable material with controlled clearances between the two. Plain bearings typically have higher friction than other types of bearings. For example, ball bearings are another example bearing used to mount a control surface, which offer lower friction than plain bearings and allow for a more compact and efficient flight control system. However, for high speed flight vehicles, such as supersonic or hypersonic flight vehicles, ball bearings may not be suitable due to the high heat aerothermal environment of such high speed flight vehicles. Additionally, other traditional bearing materials, constructions, and mounting locations for tactical missiles have also proven challenging for high-speed flight vehicles as they typically have higher friction and therefore a higher probability of failure.

US 2020/325937 A1 describes solid lubricant assemblies for providing over temperature protection for bearings and gears in rotorcraft systems. US 2018/156118 A1 describes a lubrication system for a gas turbine engine which is configured to provide pressurized air and lubricant to a bearing sump of the gas turbine engine to cool and lubricate a bearing included in the bearing sump.

### Summary

To solve the aforementioned problems, a bearing system for a control surface of a high speed flight vehicle is provided according to claim 1, which achieves a low friction bearing by taking advantage of the normally adverse and unavoidable heating of the high speed flight vehicle by the aerothermal environment. Specifically, the bearing system described herein uses heat from a heated aerothermal environment of the high speed flight vehicle to produce a lubricant that flows into the plain bearing to both lubricate and cool the bearing. The lubricant is stored in a lubricant chamber in the high speed flight vehicle. When subject to the heated aerothermal environment, the lubricant undergoes a phase change from a first phase to a second phase and flows to the bearing, providing lubrication and cooling thereof. As the lubricant flows through the bearing and is exhausted from the high speed flight vehicle, the lubricant provides an added benefit of flow-based cooling of the bearing and other vehicle components by which it flows.

According to the invention, a bearing system for a control surface of a high speed flight vehicle is provided, which includes a bearing configured to support the control surface of the high speed flight vehicle. The bearing system also includes a lubricant chamber configured to be housed within the control surface of the high speed flight vehicle, and being fluidly connected to the bearing. The lubricant chamber contains a lubricant in a first phase and is subject to heating by a heated aerothermal environment. The lubricant is configured to transition from the first phase to a second phase when the lubricant chamber is heated by the heated aerothermal environment. The lubricant in the second phase is configured to flow from the lubricant chamber to the bearing to lubricate and cool the bearing.

According to an embodiment of any paragraph(s) of this summary, the lubricant chamber includes a lubricant retainer for retaining the lubricant in the first phase within the lubricant chamber.

According to an embodiment of any paragraph(s) of this summary, the lubricant retainer includes a plurality of vents through which the lubricant in the second phase is configured to flow out of the lubricant chamber to the bearing.

According to an embodiment of any paragraph(s) of this summary, the bearing is a plain bearing including a sleeve and a shaft passing through the sleeve.

According to an embodiment of any paragraph(s) of this summary, the sleeve of the plain bearing includes a port extending from an outside diameter of the sleeve to an inside diameter of the sleeve for the lubricant in the second phase to flow into a gap between the inside diameter of the sleeve and an outside diameter of the shaft of the plain bearing.

According to an embodiment of any paragraph(s) of this summary, the inside diameter of the sleeve of the plain bearing includes at least one channel to distribute the lubricant in the second phase in the gap between the inside diameter of the sleeve and the outside diameter of the shaft of the plain bearing.

According to an embodiment of any paragraph(s) of this summary, the bearing is a gas bearing and wherein the lubricant in the first phase is a liquid that is configured to vaporize from the liquid to the second phase which is a gas.

According to an embodiment of any paragraph(s) of this summary, the bearing is a gas bearing and wherein the lubricant in the first phase is a solid that is configured to melt and vaporize from the solid to the second phase which is a gas.

According to an embodiment of any paragraph(s) of this summary, the bearing is a gas bearing and wherein the lubricant in the first phase is a solid that is configured to sublime from the solid to the second phase which is a gas.

According to an embodiment of any paragraph(s) of this summary, the bearing is a hydrostatic bearing and wherein the lubricant in the first phase is a solid that is configured to melt from the solid to the second phase which is a liquid.

According to another aspect of this disclosure, a high speed flight vehicle includes an airframe and a control surface mounted to the airframe and supported by a bearing housed at least partially within the airframe. The high speed flight vehicle includes a lubricant chamber housed within the control surface of the high speed flight vehicle, and fluidly connected to the bearing. The lubricant chamber contains a lubricant in a first phase and subject to heating by a heated aerothermal environment. The lubricant is configured to transition from the first phase to a second phase when the lubricant chamber is heated by the heated aerothermal environment. The lubricant in the second phase is configured to flow from the lubricant chamber to the bearing to lubricate and cool the bearing.

According to an embodiment of any paragraph(s) of this summary, the lubricant chamber includes a lubricant retainer for retaining the lubricant in the first phase within the lubricant chamber.

According to an embodiment of any paragraph(s) of this summary, the lubricant retainer includes a plurality of vents through which the lubricant in the second phase is configured to flow out of the lubricant chamber to the bearing.

According to another aspect of the invention, a method of lubricating and cooling a bearing with which a control surface is mounted to a high speed flight vehicle includes heating, by a heated aerothermal environment of the high speed flight vehicle, a lubricant chamber housed within the control surface of the high speed flight vehicle. The lubricant chamber contains a lubricant in a first phase. The method also includes transitioning the lubricant in the first phase to a second phase by the heating. The method then includes transferring the lubricant in the second phase from the lubricant chamber to the bearing to lubricate and cool the bearing.

According to an embodiment of any paragraph(s) of this summary, the bearing is a plain bearing including a sleeve and a shaft passing through the sleeve and the method further includes distributing the lubricant in the second phase into a gap between an inside diameter of the sleeve and an outside diameter of the shaft of the plain bearing.

According to an embodiment of any paragraph(s) of this summary, the step of transitioning includes at least one of vaporizing, melting, or subliming the lubricant in the first phase to the second phase.

The following description and the annexed drawings set forth in detail certain illustrative embodiments described in this disclosure. These embodiments are indicative, however, of but a few of the various ways in which the principles of this disclosure may be employed. Other objects, advantages and novel features will become apparent from the following detailed description when considered in conjunction with the drawings.

### Brief Description of Drawings

The annexed drawings show various aspects of the disclosure.
FIG. 1 is a schematic view of a high speed flight vehicle.
FIG. 2 is a cross sectional schematic view of a bearing system of a high speed flight vehicle according to a first embodiment.
FIG. 3 is a schematic view of the bearing system of the high speed flight vehicle according to the first embodiment.
FIG. 4 is another cross sectional schematic view of the bearing system of the high speed flight vehicle according to the first embodiment.
FIG. 5 is a cross sectional schematic view of a bearing system of a high speed flight vehicle according to the invention.
FIG. 6 is a flowchart of a method of lubricating and cooling a bearing with which a control surface is mounted to a high speed flight vehicle.

### Detailed Description

According to a general embodiment, a bearing system for a control surface of a high speed flight vehicle includes a bearing configured to support the control surface, and a pressurized lubricant chamber containing a lubricant for the bearing, the lubricant contained in the lubricant chamber being in a first phase. The lubricant chamber is subject to heating by a heated aerothermal environment (an environment external to the high speed flight vehicle). The lubricant in the first phase, therefore, is configured to transition from the first phase to a second phase when the lubricant chamber is heated by the heated aerothermal environment. The lubricant in the second phase is configured to flow from the lubricant chamber to the bearing to lubricate and cool the bearing via a flow-based cooling effect.

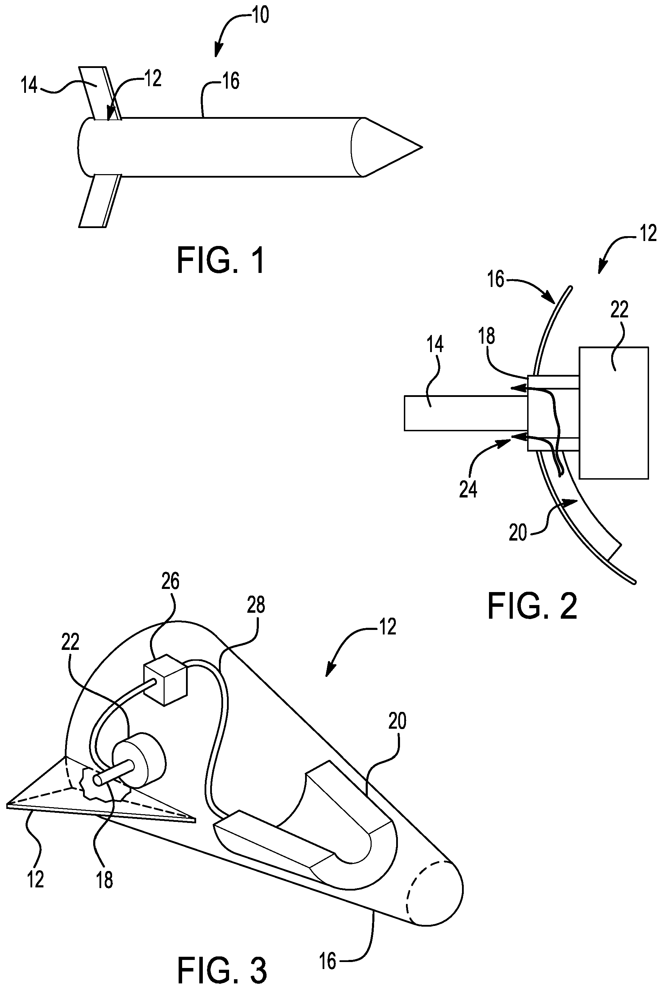

A high speed flight vehicle 10 having a bearing system 12 is depicted schematically in FIG. 1. The high speed flight vehicle 10 may be, for example, a supersonic vehicle having a speed greater than the speed of sound (greater than Mach 1) or a hypersonic vehicle having a speed of more than five times the speed of sound (greater than Mach 5). The bearing system 12 is generally located where a control surface 14 is to be mounted to an airframe 16 of the high speed flight vehicle 10, such that the control surface 14 may be supported by the bearing system 12. The depicted control surface 12 is a tail fin, however it is understood that other control surfaces, such as elevators, ailerons, elevons, rudders, flaps, slats, etc., may also be supported by the bearing system 12 described herein.

Turning to FIGS. 2-5, the bearing system 12 includes at least a bearing 18 and a pressurized lubricant chamber 20. The bearing system 12 may include more than one bearing 18 and more than one lubricant chamber 20, depending on how many control surfaces 14 are to be mounted to the airframe 16. For example, each control surface 14 configured to be mounted to the airframe 16 may have an associated bearing 18 and lubricant chamber 20. The bearing 18 is housed at least partially within the airframe 16 of the high speed flight vehicle 10 so as to be configured to support the control surface 14 and may be coupled to an actuator 22 for controlling movement of the control surface 14.

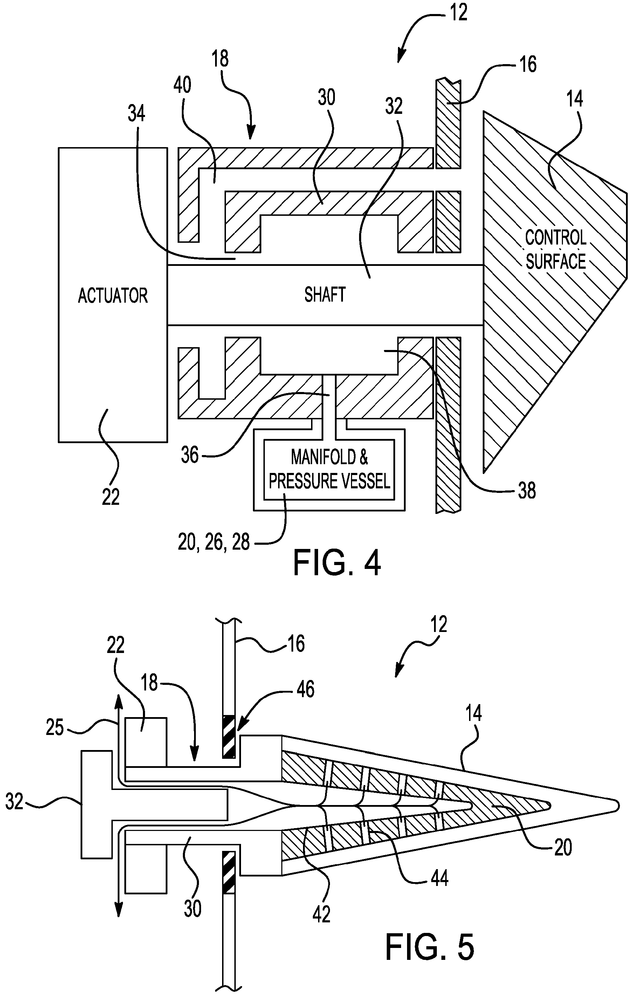

The lubricant chamber 20 contains a lubricant in a first phase and is subject to heating by a heated aerothermal environment of the high speed flight vehicle. The lubricant in the first phase is therefore configured to transition from the first phase to a second phase when the lubricant chamber is heated. Once transitioned to the second phase, the lubricant in the second phase is configured to flow from the lubricant chamber 20 to the bearing 18, for example along the flow path identified by arrows 24 in FIG. 2 or along the flow path 25 in FIG. 5, to lubricate and cool the bearing 18.

The lubricant chamber 20 may be housed within the airframe 16 of the high speed flight vehicle 10 (as depicted in FIGS. 2-4) or may alternatively be housed within the control surface 14 (as depicted in FIG. 5). An embodiment in which the lubricant chamber 20 is housed within the airframe 16 of the high speed flight vehicle 10 (FIGS. 2-4) will be described first. In this embodiment, with reference to FIG. 3 in particular, the bearing system 12 may further comprise a manifold 26 fluidly connected to the lubricant chamber 20 and to the bearing 18. The manifold 26 is configured to transfer the lubricant in the second phase from the lubricant chamber 20 to the bearing 18. For example, the manifold 26 may include plumbing 28 forming a flow path from the lubricant chamber 20 to the manifold 26 and from the manifold 26 to the bearing 18. The manifold 26 may include a plurality of orifices and may be configured to regulate a flow rate of the lubricant in the second phase from the lubricant chamber 20 to the bearing 18. In this manner, the manifold 26 may ensure suitable pressure and mass flow of the lubricant in the second phase to the bearing 18.

The lubricant chamber 20 may be conformed to or integral with the airframe 16 of the high speed flight vehicle 10. For example, the lubricant chamber 20 may be positioned against an inner surface of the airframe 14. In this manner, the lubricant chamber 20 is subject to heating by the heated aerothermal environment on an exterior of the airframe 16 so that the lubricant in the first phase in the lubricant chamber 20 can be heated and transition to the second phase.

With more detailed reference to FIG. 4, the bearing 18 may be a plain bearing having a sleeve 30 and a shaft 32 passing through the sleeve 30 with a clearance or gap 34 between an outer diameter of the shaft 32 and an inner diameter of the sleeve 30. The shaft 32 may be coupled to the actuator 22 and the control surface 14 for controlling movement of the control surface 14. The sleeve 30 of the plain bearing 18 may include a port 36 extending from an outside diameter of the sleeve 30 to an inside diameter of the sleeve 30 for the lubricant in the second phase to flow into the gap 34 of the plain bearing 18. Additionally, the inside diameter of the sleeve 30 may include at least one channel 38 in which the lubricant in the second phase may be distributed to lubricate the plain bearing 18 in the gap 34.

The bearing 18 may additionally include one or more exhaust ports 40 configured to allow the lubricant in the second phase to exit the bearing 18 and the high speed flight vehicle 10 altogether. The one or more exhaust ports 40 may pass near the actuator 22 or other components of the high speed flight vehicle 10 that may be subject to heating. In this manner, the lubricant in the second phase may serve to provide a flow-based cooling effect on the bearing 18, the actuator 22, and any other vehicle component by which it flows.

Turning to FIG. 5, an embodiment of the invention in which the lubricant chamber 20 is housed within the control surface 14 of the high speed flight vehicle will now be described. In this embodiment, the lubricant chamber 20 is conformed to or integral with the control surface 14 of the high speed flight vehicle 10. For example, the lubricant chamber 20 may be positioned against an inner surface of the control surface 14. In this manner, the lubricant chamber 20 is subject to heating by the heated aerothermal environment on an exterior of the airframe 16 and control surface 14. The lubricant chamber 20 may include a lubricant retainer 42 configured to retain the lubricant in the first phase within the lubricant chamber 20. The lubricant retainer 42 may include a plurality of vents 44 through which the lubricant in the second phase may flow when the lubricant chamber 20 is heated and the lubricant in the first phase transitions to the second phase. The lubricant in the second phase, therefore, may flow out of the lubricant chamber 20 toward a center of the control surface 14 and to the bearing 18. The bearing 18 may be a plain bearing having the sleeve 30 and shaft 32 as previously described. As depicted in FIG. 5, however, the sleeve 30 may be configured to be coupled to the actuator 22 and the control surface 14 for controlling movement of the control surface 14 instead of the shaft 32. The airframe 16 may include a seal 46 for securing the sleeve 30 of the bearing 18.

In either of the embodiments described above, the material of the bearing 18 may be any material that is suitable for the load and environments in which it is applied. The bearing 18 may be a gas bearing or a hydrostatic bearing. A hydrostatic bearing may support very high loads with high stiffness and remove heat via flow-based cooling. A gas-fed bearing may provide extremely low friction and high stiffness, carry high loads, and remove heat via flow-based cooling in a similar manner. When the bearing 18 is a gas bearing, the lubricant in the first phase may be a pressurized liquid that is configured to vaporize from the pressurized liquid to the second phase which is a pressurized gas. Alternatively, the lubricant in the first phase may be solid that is configured to melt and vaporize from the solid to the second phase which is a pressurized gas. Otherwise, the lubricant in the first phase may be solid that is configured to sublime from the solid to the second phase which is a pressurized gas. When the bearing 18 is a hydrostatic bearing, the lubricant in the first phase may, for example, be a solid that is configured to melt from the solid to the second phase which is a pressurized liquid. As a non-limiting example, the lubricant material used may be wax. The specific lubricant material used may be optimized to address, for example, the loads supported by the bearing 18, the duration of the mission of the high speed flight vehicle 10, or the amount of cooling that is required.

Additionally, in either of the embodiments described above, the lubricant chamber 20 may serve as a heat sink, providing an insulative effect on the high speed flight vehicle 10 or control surface 14 by phase-change based cooling. That is, placing the lubricant chamber 20 on an inner wall of either the airframe 16 or the control surface 14 may mitigate heat flow into the airframe 16 or control surface 14, respectively. Accordingly, the placement of the lubricant chamber 20 may be optimized to provide such insulative effect on any structure or portion of the high speed flight vehicle prone to overheating.

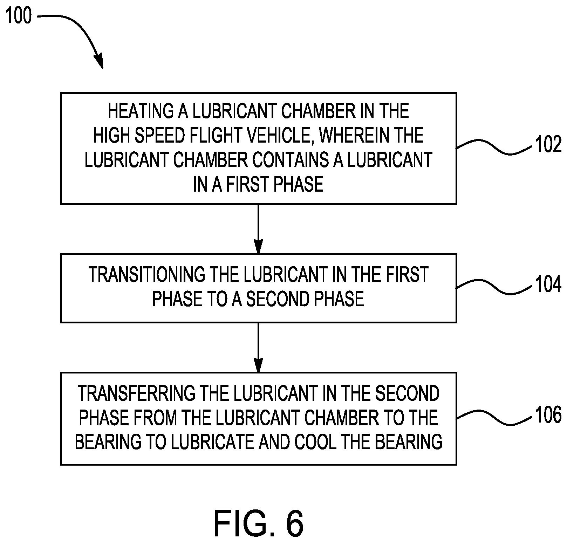

With reference to FIG. 6, a method 100 of lubricating and cooling a bearing with which a control surface is mounted to a high speed flight vehicle subject to a heated aerothermal environment is depicted. For example, the method 100 may be applicable to the high speed flight vehicle 10 and bearing system 12 described herein (FIGS. 1-5). The method 100 includes the step of heating 102, by the heated aerothermal environment, at least one lubricant chamber in the high speed flight vehicle. The lubricant chamber contains a lubricant in a first phase. The method 100 then includes the step of transitioning 104 the lubricant in the first phase to a second phase by the step of heating 102. The step of transitioning 104 may include at least one of vaporizing, melting, or subliming the lubricant in the first phase to the second phase. For example, as described above, the lubricant in the first phase may be a liquid and the transitioning 104 may include vaporizing the liquid to the second phase which is gas. Alternatively, the lubricant in the first phase may be solid and the transitioning 104 may include melting and vaporizing the solid to the second phase which is a pressurized gas. Otherwise, the lubricant in the first phase may be solid and the transitioning 104 may include subliming the solid to the second phase which is a pressurized gas. Finally, the lubricant in the first phase may be a solid and the transitioning 104 may include melting the solid to the second phase which is a pressurized liquid.

The method 100 also includes the step of transferring 106 the lubricant in the second phase from the lubricant chamber to the bearing to lubricate and cool the bearing. The step of transferring 106 may include controlling the transferring 106 with a manifold. The step of transferring 106, via the manifold, may also include regulating a flow rate of the lubricant in the second phase. The method 100 may then include a step of exhausting the lubricant in the second phase from the low friction bearing to an exterior of the high speed flight vehicle to remove heat absorbed by the lubricant in the second phase from the high speed flight vehicle.

Although the above disclosure has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments. In addition, while a particular feature may have been described above with respect to only one or more of several illustrated embodiments, such feature may be combined with one or more other features of the other embodiments, as may be desired and advantageous for any given or particular application.

## Claims

1. A bearing system (12) for a control surface (14) of a high speed flight vehicle (10), the bearing system comprising:
a bearing (18) configured to support the control surface of the high speed flight vehicle; and
a lubricant chamber (20) configured to be housed within the control surface of the high speed flight vehicle, and being fluidly connected to the bearing, the lubricant chamber containing a lubricant in a first phase and subject to heating by a heated aerothermal environment, wherein the lubricant is configured to transition from the first phase to a second phase when the lubricant chamber is heated by the heated aerothermal environment;
wherein the lubricant in the second phase is configured to flow from the lubricant chamber to the bearing to lubricate and cool the bearing.

2. The bearing system according to claim 1, wherein the lubricant chamber includes a lubricant retainer (42) for retaining the lubricant in the first phase within the lubricant chamber.

3. The bearing system according to claim 2, wherein the lubricant retainer includes a plurality of vents (44) through which the lubricant in the second phase is configured to flow out of the lubricant chamber to the bearing.

4. The bearing system according to any one of claim 1 to claim 3, wherein the bearing is a plain bearing including a sleeve (30) and a shaft (32) passing through the sleeve.

5. The bearing system according to claim 4, wherein the sleeve of the plain bearing includes a port (36) extending from an outside diameter of the sleeve to an inside diameter of the sleeve for the lubricant in the second phase to flow into a gap between the inside diameter of the sleeve and an outside diameter of the shaft of the plain bearing, optionally wherein the inside diameter of the sleeve of the plain bearing includes at least one channel to distribute the lubricant in the second phase in the gap between the inside diameter of the sleeve and the outside diameter of the shaft of the plain bearing.

6. The bearing system according to any one of claim 1 to claim 5, wherein the bearing is a gas bearing and wherein the lubricant in the first phase is a liquid that is configured to vaporize from the liquid to the second phase which is a gas.

7. The bearing system according to any one of claim 1 to claim 5, wherein the bearing is a gas bearing and wherein the lubricant in the first phase is a solid that is configured to melt and vaporize from the solid to the second phase which is a gas.

8. The bearing system according to any one of claim 1 to claim 5, wherein the bearing is a gas bearing and wherein the lubricant in the first phase is a solid that is configured to sublime from the solid to the second phase which is a gas.

9. The bearing system according to any one of claim 1 to claim 5, wherein the bearing is a hydrostatic bearing and wherein the lubricant in the first phase is a solid that is configured to melt from the solid to the second phase which is a liquid.

10. A high speed flight vehicle, comprising:
an airframe (16);
a control surface (14) mounted to the airframe and supported by a bearing (18) housed at least partially within the airframe; and
a lubricant chamber (20) housed within the control surface of the high speed flight vehicle, and fluidly connected to the bearing, the lubricant chamber containing a lubricant in a first phase and subject to heating by a heated aerothermal environment, wherein the lubricant is configured to transition from the first phase to a second phase when the lubricant chamber is heated by the heated aerothermal environment;
wherein the lubricant in the second phase is configured to flow from the lubricant chamber to the bearing to lubricate and cool the bearing.

11. The high speed flight vehicle according to claim 10, wherein the lubricant chamber includes a lubricant retainer (42) for retaining the lubricant in the first phase within the lubricant chamber.

12. The high speed flight vehicle according to claim 11, wherein the lubricant retainer includes a plurality of vents (44) through which the lubricant in the second phase is configured to flow out of the lubricant chamber to the bearing.

13. A method of lubricating and cooling a bearing with which a control surface is mounted to a high speed flight vehicle, the method comprising the steps of:
heating, by a heated aerothermal environment of the high speed flight vehicle, a lubricant chamber housed within the control surface of the high speed flight vehicle, wherein the lubricant chamber contains a lubricant in a first phase;
transitioning the lubricant in the first phase to a second phase by the heating;
transferring the lubricant in the second phase from the lubricant chamber to the bearing to lubricate and cool the bearing.

14. The method according to claim 13, wherein the bearing is a plain bearing including a sleeve and a shaft passing through the sleeve, the method further comprising the step of distributing the lubricant in the second phase into a gap between an inside diameter of the sleeve and an outside diameter of the shaft of the plain bearing.

15. The method according to any one of claim 13 or claim 14, wherein the step of transitioning includes at least one of vaporizing, melting, or subliming the lubricant in the first phase to the second phase.

## Patentansprüche

1. Lagersystem (12) für eine Steuerfläche (14) eines Hochgeschwindigkeitsflugzeugs (10), wobei das Lagersystem Folgendes umfasst:
ein Lager (18), das dazu konfiguriert ist, die Steuerfläche des Hochgeschwindigkeitsflugzeugs zu lagern; und
eine Schmiermittelkammer (20), die dazu konfiguriert ist, innerhalb der Steuerfläche des Hochgeschwindigkeitsflugzeugs untergebracht zu sein, und mit dem Lager in Fluidverbindung steht, wobei die Schmiermittelkammer ein Schmiermittel in einer ersten Phase enthält und Erhitzen durch eine erhitzte aerothermische Umgebung ausgesetzt ist, wobei das Schmiermittel dazu konfiguriert ist, von der ersten Phase in eine zweite Phase überführt zu werden, wenn die Schmiermittelkammer durch die erhitzte aerothermische Umgebung erhitzt wird;
wobei das Schmiermittel in der zweiten Phase dazu konfiguriert ist, aus der Schmiermittelkammer zum Lager zu fließen, um das Lager zu schmieren und zu kühlen.

2. Lagersystem nach Anspruch **1,** wobei die Schmiermittelkammer einen Schmiermittelhalter (42) zum Halten des Schmiermittels in der ersten Phase innerhalb der Schmiermittelkammer beinhaltet.

3. Lagersystem nach Anspruch 2, wobei der Schmiermittelhalter eine Vielzahl von Auslassöffnungen (44) beinhaltet, durch die das Schmiermittel in der zweiten Phase dazu konfiguriert ist, aus der Schmiermittelkammer zum Lager zu fließen.

4. Lagersystem nach einem der Ansprüche 1 bis 3, wobei das Lager ein Gleitlager ist, das eine Hülse (30) und eine durch die Hülse verlaufende Welle (32) beinhaltet.

5. Lagersystem nach Anspruch 4, wobei die Hülse des Gleitlagers einen Anschluss (36) beinhaltet, der sich von einem Außendurchmesser der Hülse zu einem Innendurchmesser der Hülse erstreckt, damit das Schmiermittel in der zweiten Phase in einen Spalt zwischen dem Innendurchmesser der Hülse und einem Außendurchmesser der Welle des Gleitlagers fließen kann, wobei optional der Innendurchmesser der Hülse des Gleitlagers mindestens einen Kanal beinhaltet, um das Schmiermittel in der zweiten Phase im Spalt zwischen dem Innendurchmesser der Hülse und dem Außendurchmesser der Welle des Gleitlagers zu verteilen.

6. Lagersystem nach einem der Ansprüche 1 bis 5, wobei das Lager ein Gaslager ist und wobei das Schmiermittel in der ersten Phase eine Flüssigkeit ist, die dazu konfiguriert ist, von der Flüssigkeit in die zweite Phase, die ein Gas ist, zu verdampfen.

7. Lagersystem nach einem der Ansprüche 1 bis 5, wobei das Lager ein Gaslager ist und wobei das Schmiermittel in der ersten Phase ein Feststoff ist, der dazu konfiguriert ist, zu schmelzen und vom Feststoff in die zweite Phase, die ein Gas ist, zu verdampfen.

8. Lagersystem nach einem der Ansprüche 1 bis 5, wobei das Lager ein Gaslager ist und wobei das Schmiermittel in der ersten Phase ein Feststoff ist, der dazu konfiguriert ist, vom Feststoff in die zweite Phase, die ein Gas ist, zu sublimieren.

9. Lagersystem nach einem der Ansprüche 1 bis 5, wobei das Lager ein hydrostatisches Lager ist und wobei das Schmiermittel in der ersten Phase ein Feststoff ist, der dazu konfiguriert ist, vom Feststoff in die zweite Phase, die eine Flüssigkeit ist, zu schmelzen.

10. Hochgeschwindigkeitsflugzeug, umfassend:
eine Flugzeugzelle (16);
eine Steuerfläche (14), die an der Flugzeugzelle montiert ist und von einem Lager (18) gelagert wird, das mindestens teilweise innerhalb der Flugzeugzelle untergebracht ist; und
eine Schmiermittelkammer (20), die innerhalb der Steuerfläche des Hochgeschwindigkeitsflugzeugs untergebracht ist und mit dem Lager in Fluidverbindung steht, wobei die Schmiermittelkammer ein Schmiermittel in einer ersten Phase enthält und Erhitzen durch eine erhitzte aerothermische Umgebung ausgesetzt ist, wobei das Schmiermittel dazu konfiguriert ist, von der ersten Phase in eine zweite Phase überführt zu werden, wenn die Schmiermittelkammer durch die erhitzte aerothermische Umgebung erhitzt wird;
wobei das Schmiermittel in der zweiten Phase dazu konfiguriert ist, aus der Schmiermittelkammer zum Lager zu fließen, um das Lager zu schmieren und zu kühlen.

11. Hochgeschwindigkeitsflugzeug nach Anspruch 10, wobei die Schmiermittelkammer einen Schmiermittelhalter (42) zum Halten des Schmiermittels in der ersten Phase innerhalb der Schmiermittelkammer beinhaltet.

12. Hochgeschwindigkeitsflugzeug nach Anspruch 11, wobei der Schmiermittelhalter eine Vielzahl von Auslassöffnungen (44) beinhaltet, durch die das Schmiermittel in der zweiten Phase dazu konfiguriert ist, aus der Schmiermittelkammer zum Lager zu fließen.

13. Verfahren zum Schmieren und Kühlen eines Lagers, mit dem eine Steuerfläche an einem Hochgeschwindigkeitsflugzeug montiert ist, wobei das Verfahren die folgenden Schritte umfasst:
Erhitzen einer Schmiermittelkammer, die innerhalb der Steuerfläche des Hochgeschwindigkeitsflugzeugs untergebracht ist, durch eine erhitzte aerothermische Umgebung des Hochgeschwindigkeitsflugzeugs, wobei die Schmiermittelkammer ein Schmiermittel in einer ersten Phase enthält;
Überführen des Schmiermittels in der ersten Phase in eine zweite Phase durch das Erhitzen;
Transportieren des Schmiermittels in der zweiten Phase aus der Schmiermittelkammer zum Lager, um das Lager zu schmieren und zu kühlen.

14. Verfahren nach Anspruch 13, wobei das Lager ein Gleitlager ist, das eine Hülse und eine durch die Hülse verlaufende Welle beinhaltet, wobei das Verfahren ferner den Schritt des Verteilens des Schmiermittels in der zweiten Phase in einen Spalt zwischen einem Innendurchmesser der Hülse und einem Außendurchmesser der Welle des Gleitlagers umfasst.

15. Verfahren nach Anspruch 13 oder 14, wobei der Schritt des Überführens mindestens eines von Verdampfen, Schmelzen oder Sublimieren des Schmiermittels in der ersten Phase in die zweite Phase beinhaltet.

## Revendications

1. Système de palier (12) pour une gouverne (14) d'un avion à grande vitesse (10), le système de palier comprenant :
un palier (18) configuré pour supporter la gouverne de l'avion à grande vitesse ; et
une chambre de lubrifiant (20) configurée pour être logée à l'intérieur de la gouverne de l'avion à grande vitesse, et étant reliée fluidiquement au palier, la chambre de lubrifiant contenant un lubrifiant dans une première phase et soumise à un chauffage par un environnement aérothermique chauffé, dans lequel le lubrifiant est configuré pour passer de la première phase à une seconde phase lorsque la chambre de lubrifiant est chauffée par l'environnement aérothermique chauffé ;
dans lequel le lubrifiant dans la seconde phase est configuré pour s'écouler de la chambre de lubrifiant vers le palier pour lubrifier et refroidir le palier.

2. Système de palier selon la revendication **1,** dans lequel la chambre de lubrifiant comprend un dispositif de retenue de lubrifiant (42) pour retenir le lubrifiant dans la première phase à l'intérieur de la chambre de lubrifiant.

3. Système de palier selon la revendication 2, dans lequel le dispositif de retenue de lubrifiant comprend une pluralité d'évents (44) à travers lesquels le lubrifiant dans la seconde phase est configuré pour s'écouler hors de la chambre de lubrifiant vers le palier.

4. Système de palier selon l'une quelconque des revendications 1 **à** 3, dans lequel le palier est un palier lisse comprenant un manchon (30) et un arbre (32) traversant le manchon.

5. Système de palier selon la revendication 4, dans lequel le manchon du palier lisse comprend un orifice (36) s'étendant d'un diamètre extérieur du manchon à un diamètre intérieur du manchon pour que le lubrifiant dans la seconde phase s'écoule dans un espace entre le diamètre intérieur du manchon et un diamètre extérieur de l'arbre du palier lisse, éventuellement dans lequel le diamètre intérieur du manchon du palier lisse comprend au moins un canal pour répartir le lubrifiant dans la seconde phase dans l'espace entre le diamètre intérieur du manchon et le diamètre extérieur de l'arbre du palier lisse.

6. Système de palier selon l'une quelconque des revendications 1 à 5, dans lequel le palier est un palier à gaz et dans lequel le lubrifiant dans la première phase est un liquide qui est configuré pour se vaporiser de la phase liquide à la seconde phase qui est un gaz.

7. Système de palier selon l'une quelconque des revendications 1 à 5, dans lequel le palier est un palier à gaz et dans lequel le lubrifiant dans la première phase est un solide qui est configuré pour fondre et se vaporiser de la phase solide à la seconde phase qui est un gaz.

8. Système de palier selon l'une quelconque des revendications 1 à 5, dans lequel le palier est un palier à gaz et dans lequel le lubrifiant dans la première phase est un solide qui est configuré pour se sublimer de la phase solide à la seconde phase qui est un gaz.

9. Système de palier selon l'une quelconque des revendications 1 à 5, dans lequel le palier est un palier hydrostatique et dans lequel le lubrifiant dans la première phase est un solide qui est configuré pour fondre de la phase solide à la seconde phase qui est un liquide.

10. Avion à grande vitesse, comprenant :
une cellule (16) ;
une gouverne (14) montée sur la cellule et supportée par un palier (18) logé au moins en partie à l'intérieur de la cellule ; et
une chambre de lubrifiant (20) logée à l'intérieur de la gouverne de l'avion à grande vitesse, et reliée fluidiquement au palier, la chambre de lubrifiant contenant un lubrifiant dans une première phase et soumise à un chauffage par un environnement aérothermique chauffé, dans lequel le lubrifiant est configuré pour passer de la première phase à une seconde phase lorsque la chambre de lubrifiant est chauffée par l'environnement aérothermique chauffé ;
dans lequel le lubrifiant dans la seconde phase est configuré pour s'écouler de la chambre de lubrifiant vers le palier pour lubrifier et refroidir le palier.

11. Avion à grande vitesse selon la revendication 10, dans lequel la chambre de lubrifiant comprend un dispositif de retenue de lubrifiant (42) pour retenir le lubrifiant dans la première phase à l'intérieur de la chambre de lubrifiant.

12. Avion à grande vitesse selon la revendication 11, dans lequel le dispositif de retenue de lubrifiant comprend une pluralité d'évents (44) à travers lesquels le lubrifiant dans la seconde phase est configuré pour s'écouler hors de la chambre de lubrifiant vers le palier.

13. Procédé de lubrification et de refroidissement d'un palier avec lequel une gouverne est montée sur un avion à grande vitesse, le procédé comprenant les étapes suivantes de :
chauffage, par un environnement aérothermique chauffé de l'avion à grande vitesse, d'une chambre de lubrifiant logée à l'intérieur de la gouverne de l'avion à grande vitesse, dans lequel la chambre de lubrifiant contient un lubrifiant dans une première phase ;
transition du lubrifiant de la première phase vers une seconde phase par chauffage ;
transfert du lubrifiant dans la seconde phase de la chambre de lubrifiant vers le palier pour lubrifier et refroidir le palier.

14. Procédé selon la revendication 13, dans lequel le palier est un palier lisse comprenant un manchon et un arbre traversant le manchon, le procédé comprenant en outre l'étape de répartition du lubrifiant dans la seconde phase à l'intérieur d'un espace entre un diamètre intérieur du manchon et un diamètre extérieur de l'arbre du palier lisse.

15. Procédé selon l'une quelconque des revendications 13 ou 14, dans lequel l'étape de transition comprend au moins l'une parmi la vaporisation, la fusion ou la sublimation du lubrifiant de la première phase à la seconde phase.
